# EUROPEAN PATENT APPLICATION

(11) **EP 3 282 641 A1**
(43) Date of publication of application: **14.02.2018**
(21) Application number: 15888269.6
(22) Date of filing: 16.07.2015
(51) Int. Cl.: H04L 12/24

(54) **METHOD AND DEVICE FOR INITIATING OPTICAL FIBER COMMUNICATION SERVICE**

(30) Priority: 10.04.2015 CN 201510167365
(71) Applicant: ZTE Corporation, Shenzhen, Guangdong 518057 (CN)
(72) Inventor: WU, Bo, Shenzhen Guangdong 518057 (CN); ZHU, Liuhui, Shenzhen Guangdong 518057 (CN); JIANG, Hongbin, Shenzhen Guangdong 518057 (CN)
(74) Representative: Studio Torta S.p.A.
(86) International application number: PCT/CN2015/084267
(87) International publication number: WO 2016/161714

(57) **Abstract**

Provided are a method and device for initiating an optical fiber communication service, the method comprising: when detecting that a processor receives an interrupt signal output by a near filed communication (NFC) chip, acquiring, by the processor, registration information recorded in the NFC chip, wherein the interrupt signal is generated an output by the NFC chip when data of a user region in the NFC chip changes; and performing, by the processor and according to the acquired registration information, a registration operation to initiate an optical fiber communication service. In an embodiment of the present invention, the registration information recorded in the NFC chip in an optical network unit (ONU) device can be modified by installing non a handheld device an application program supporting a modification of the NFC information of the NFC chip, thus quickly initiating an optical fiber communication service, improving an efficiency of initiating the optical fiber communication service, and reducing a workload of an installation and maintenance personnel.

## Description

### TECHNICAL FIELD

The disclosure relates to the field of terminal equipment, and in particular, to a method and an apparatus for opening an optical fiber communication service.

### BACKGROUND

Since the 21st century, the popularity of computers and the development of information networking make the global broadband access network technology have been developed rapidly. Fiber to the Home (FTTH) has received support and attention from network operators and even governments. At present, FTTH has entered the third development stage with very clear and promising development momentum, and is expected to maintain a high growth rate in the future for a long period of time. Related technical standards will be gradually improved with the development of FTTH, and thus it can be said, FTTH is facing a very good development opportunity and a broad development prospect.

At present, the opening of an optical fiber communication service is handled manually by installation and maintenance personnel, who, before the opening, get connected to an optical network unit (ONU) through a notebook computer, and then enter a user's registration information and password by operating relevant pages, also need to log in the relevant pages to operate if a modification is needed. As the installation and maintenance personnel need to carry things like a notebook computer and network cables when going to the user's home to open the service in real time or modify the authentication information, while the things like a notebook computer and network cables have a large volume and are not easy to carry, the burden of the installation and maintenance personnel is increased, and the efficiency of the installation and maintenance personnel opening the optical fiber communication service is affected.

### SUMMARY

The disclosure provides a method and an apparatus for opening an optical fiber communication service. As it is possible to modify registration information recorded in a near field communication chip in an optical network element device by installing an application program supporting the modification of near field communication information through a handheld device, thereby realizing the fast opening of an optical fiber communication service, the efficiency of the opening of the optical fiber communication service is improved, and the burden of installation and maintenance personnel is reduced.

To solve the above-mentioned technical problem, the disclosure adopts the following technical solution:
According to one of embodiments of the disclosure, there is provided a method for opening an optical fiber communication service, the method including: when it is detected that a processor has received an interrupt signal output from a near field communication (NFC) chip, the processor acquiring registration information recorded in the NFC chip, wherein the interrupt signal is generated and output by the NFC chip when data of a user area of the NFC chip is changed; and the processor performing registration processing for opening the optical fiber communication service according to the acquired registration information.

In an embodiment of the disclosure, the processor performing registration processing for opening the optical fiber communication service according to the acquired registration information includes: determining whether the registration information is valid; if the registration information is valid, the processor sending the registration information to a registration module to enable the registration module to authenticate the registration information; the processor modifying the data of the user area of the NFC chip to be information about an application program supporting the modification of NFC information of a handheld device.

In an embodiment of the disclosure, if the registration information is invalid, the processor modifies the data of the user area of the NFC chip to be information about the application program.

In an embodiment of the disclosure, said determining whether the registration information is valid includes: determining whether the format of the registration information conforms to the Passive Optical Network (PON) standard; if the format of the registration information conforms to the PON standard, the registration information is valid; if the format of the registration information does not conform to the PON standard, the registration information is invalid.

In an embodiment of the disclosure, when it is detected that the input terminal of the processor has received an interrupt signal output by the NFC chip, the method further includes: masking a pin of the processor through which to receive the interrupt signal from the NFC chip. Accordingly, after the processor performs registration processing for opening the optical fiber communication service according to the acquired registration information, the method further includes: releasing the masking of the pin of the processor through which to receive the interrupt signal from the NFC chip.

In an embodiment of the disclosure, the processor acquiring registration information recorded in the NFC chip is specifically as follows: the processor reading the registration information recorded in the NFC chip through an Inter-Integrated Circuit (I2C) bus.

According to another embodiment of the disclosure, there is provided an apparatus for opening an optical fiber communication service, including: an acquisition module configured to acquire, when it is detected that a processor has received an interrupt signal output from a NFC chip, registration information recorded in the NFC chip, wherein the interrupt signal is generated and output by the NFC chip when data of a user area of the NFC chip is changed; and a processing module configured to perform registration processing for opening the optical fiber communication service according to the acquired registration information.

In an embodiment of the disclosure, the processing module includes: a determination unit configured to determine whether the registration information is valid; an authentication unit configured to send, if the registration information is valid, the registration information to a registration module to enable the registration module to authenticate the registration information; a first modification unit configured to modify the data of the user area of the NFC chip to be information about an application program supporting the modification of NFC information of a handheld device.

In an embodiment of the disclosure, the apparatus further includes a second modification module configured to modify, if the registration information is invalid, the data of the user area of the NFC chip to be information about the application program.

In an embodiment of the disclosure, the determination unit includes: a first determination sub-unit configured to determine whether the format of the registration information conforms to the Passive Optical Network (PON) standard; a second determination sub-unit configured to determine that, if the format of the registration information conforms to the PON standard, the registration information is valid; a third determination sub-unit configured to determine that, if the format of the registration information does not conform to the PON standard, the registration information is invalid.

In an embodiment of the disclosure, the apparatus further includes: a first masking module configured to mask, when it is detected that the input terminal of the processor has received an interrupt signal output by the NFC chip, a pin of the processor through which to receive the interrupt signal from the NFC chip; a second masking module configured to release, after the processor performs registration processing for opening the optical fiber communication service according to the acquired registration information, the masking of the pin of the processor through which to receive the interrupt signal from the NFC chip.

In an embodiment of the disclosure, the acquisition module includes an acquisition unit configured to read the registration information recorded in the NFC chip through an I2C bus. The embodiments of the disclosure at least include the following advantageous effects: in the embodiments of the disclosure, as it is possible to modify registration information recorded in a near field communication chip in an optical network element device by installing an application program supporting the modification of near field communication information through a handheld device, thereby realizing the fast opening of an optical fiber communication service, the efficiency of the opening of the optical fiber communication service is improved, and the burden of installation and maintenance personnel is reduced.

### BRIEF DESCRIPTION OF THE DRAWINGS

Figure 1 shows the first flowchart of a method for opening an optical fiber communication service provided by an embodiment of the disclosure;
Figure 2 shows the second flowchart of the method for opening an optical fiber communication service provided by an embodiment of the disclosure;
Figure 3 shows the third flowchart of the method for opening an optical fiber communication service provided by an embodiment of the disclosure;
Figure 4 shows the fourth flowchart of the method for opening an optical fiber communication service provided by an embodiment of the disclosure;
Figure 5 shows the first schematic diagram of a practical application of the method for opening an optical fiber communication service provided by an embodiment of the disclosure;
Figure 6 shows a schematic diagram of a system applying the method for opening an optical fiber communication service in an embodiment of the disclosure;
Figure 7 shows a flow chart of a processing procedure of an interrupt processing function in an embodiment of the disclosure;
Figure 8 shows the second schematic diagram of a practical application of the method for opening an optical fiber communication service provided by an embodiment of the disclosure;
Figure 9 shows the first schematic diagram of an apparatus for opening an optical fiber communication service provided by an embodiment of the disclosure;
Figure 10 shows a schematic diagram of a processing module of an embodiment of the disclosure;
Figure 11 shows the second schematic diagram of an apparatus for opening an optical fiber communication service provided by an embodiment of the disclosure;
Figure 12 shows a schematic diagram of a determination unit in an embodiment of the disclosure;
Figure 13 shows the third schematic diagram of an apparatus for opening an optical fiber communication service provided by an embodiment of the disclosure.

### DETAILED DESCRIPTION

To make the object, technical solution and advantages of the disclosure clearer, the disclosure will now be described in detail with reference to the accompanying drawings and specific embodiments.

### Embodiment I

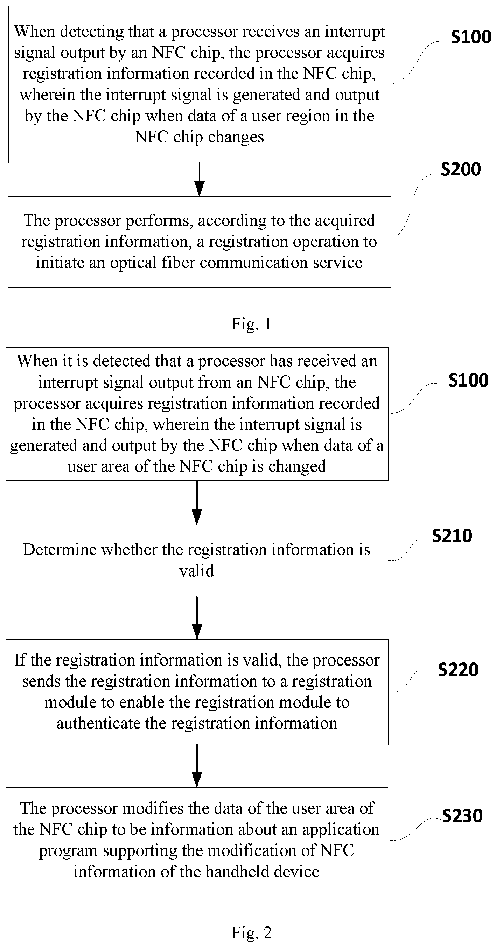

As shown in Figure 1, which is the first flowchart of a method for opening an optical fiber communication service provided by an embodiment of the disclosure, the method includes: step S100, when it is detected that a processor has received an interrupt signal output from an NFC chip, the processor acquiring registration information recorded in the NFC chip, wherein the interrupt signal is generated and output by the NFC chip when data of a user area of the NFC chip is changed.
step S200, the processor performing registration processing for opening the optical fiber communication service according to the acquired registration information.

Here, by modifying the data of the user area of the NFC chip in a network element device through a handheld device, the registration information is sent to the NFC chip in the network element device by means of near field communication, the processor in the network element device reads the registration information and performs registration processing of the opening of the optical fiber communication service according to the registration information. The embodiment of the disclosure improves the efficiency of the opening of the optical fiber communication service and reduces the burden of the installation and maintenance personnel. The disclosure can open the optical fiber communication service simply and efficiently, and has a great market prospect.

### Embodiment II

As shown in Figure 2, on the basis of Embodiment I, in still another embodiment of the disclosure, step S200 includes the following steps:
step S210, determining whether the registration information is valid;
step S220, if the registration information is valid, the processor sending the registration information to a registration module to enable the registration module to authenticate the registration information;
step S230, the processor modifying the data of the user area of the NFC chip to be information about an application program supporting the modification of NFC information of the handheld device.

Here, if the registration information is invalid, the processor modifies the data of the user area of the NFC chip to be information about an application program supporting the modification of NFC information of the handheld device, the data of the user area of the NFC chip may be an application program supporting the modification of NFC information of the handheld device, and may also be a Web site link of the application program on the network, so that the installation and maintenance personnel can modify the data of the user area of the NFC chip by simply installing the application program through a handheld device.

### Embodiment III

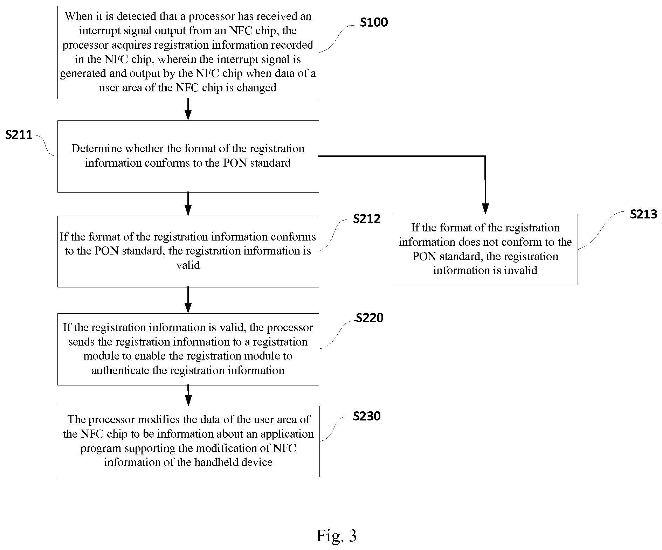

As shown in Figure 3, on the basis of Embodiment II, in still another embodiment of the disclosure, step S210 includes the following steps:
step S211, determining whether the format of the registration information conforms to the PON standard;
step S212, if the format of the registration information conforms to the PON standard, the registration information is valid;
step S213, if the format of the registration information does not conform to the PON standard, the registration information is invalid.

Here, whether the format of the registration information conforms to the PON standard is used as a basis for determining whether the registration information is valid, without the need to detect whether the content of the registration information is valid. The embodiment of the disclosure makes it easier and more quickly to determine whether the registration information is valid.

### Embodiment IV

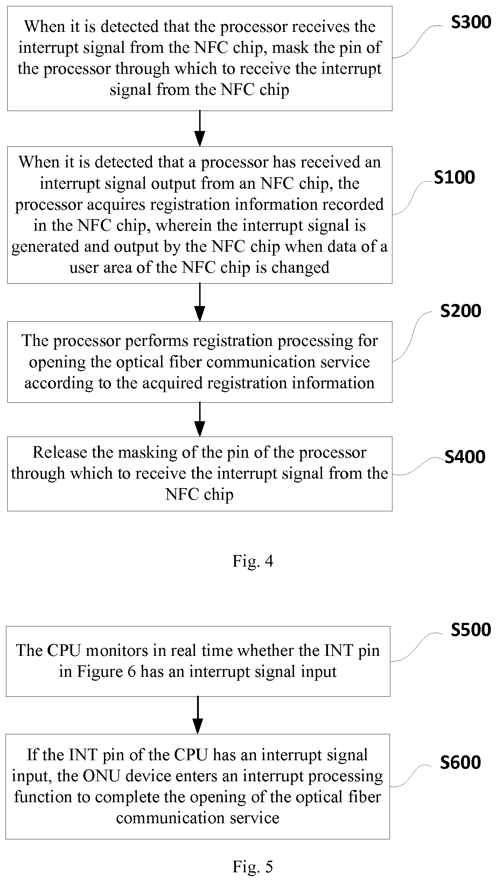

As shown in Figure 4, on the basis of Embodiment I, the method for opening an optical fiber communication service provided by an embodiment of the disclosure includes:
step S300, when it is detected that the input terminal of the processor has received an interrupt signal output by the NFC chip, masking a pin of the processor through which to receive the interrupt signal from the NFC chip.

step S100, when it is detected that a processor has received an interrupt signal output from an NFC chip, the processor acquiring registration information recorded in the NFC chip, wherein the interrupt signal is generated and output by the NFC chip when data of a user area of the NFC chip is changed. Here, the registration information recorded in the NFC chip is read via an I2C bus.

step 200, the processor performing registration processing for opening the optical fiber communication service according to the acquired registration information.

step S400, releasing the masking of the pin of the processor through which to receive the interrupt signal from the NFC chip.

Here, after the pin of the processor through which to receive the interrupt signal from the NFC chip is masked, and before the execution of step S400, when the NFC chip outputs an interrupt signal again, the interrupt signal is masked, without any influence on the previous interrupt signal.

### Embodiment V

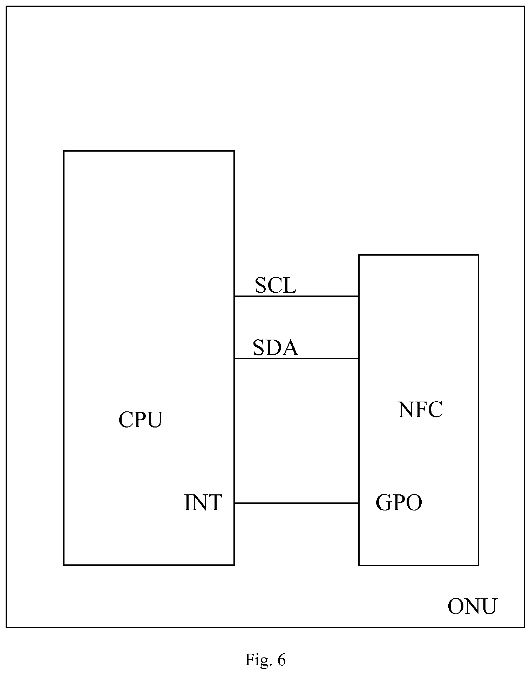

Referring to Figures 5 and 6, in a practical application of the method for opening an optical fiber communication service provided by an embodiment of the disclosure, the method includes:
step S500, the CPU monitors in real time whether the INT pin in Figure 6 has an interrupt signal input. Here, the NFC chip and CPU are connected through the I2C bus, and communicate information to one another through a serial data (SDA) line and a serial clock line (SCL). GPO in the NFC chip is connected to an input pin INT of CPU. After an external handheld device writes data of a user area of the NFC chip in ONU by means of near field communication, the NFC chip outputs an electric level signal through a general purpose output pin (GPO) as an interrupt signal to the INT pin of CPU. It should be noted that the NFC chip must work in a label mode, and the attribute of GPO is set to 0x30, thus ensuring that, when the data of the user area of the NFC chip changes, the NFC chip generates and sends an interrupt signal to the CPU.

step S600, if the INT pin of the CPU has an interrupt signal input, the ONU device entering an interrupt processing function to complete the opening of the optical fiber communication service.

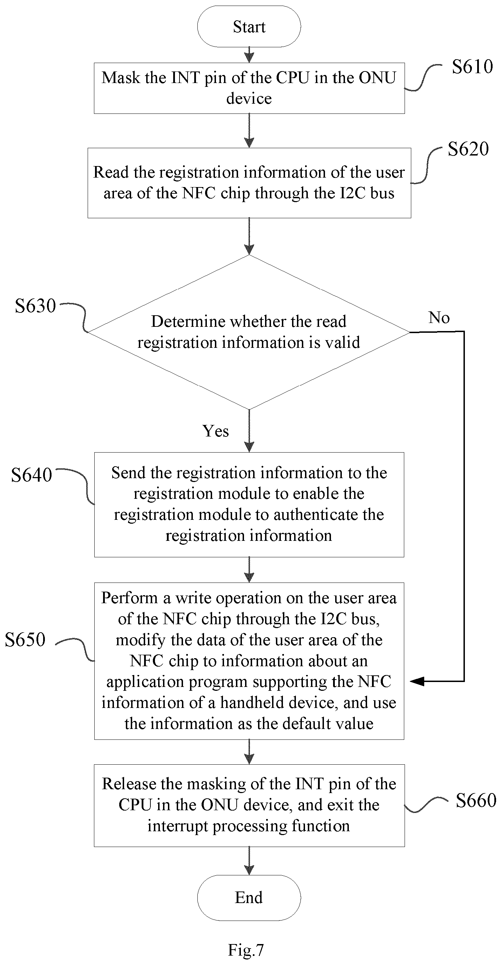

Referring to Figures 6 and 7, the specific steps of step S600 include:
step S610, masking the INT pin of the CPU in the ONU device.
step S620, reading the registration information of the user area of the NFC chip through the I2C bus.
step S630, determining whether the read registration information is valid, if the registration information is valid, executing step S640, if the registration information is invalid, executing step S650.
step S640, sending the registration information to the registration module to enable the registration module to authenticate the registration information.
step S650, performing a write operation on the user area of the NFC chip through the I2C bus, modifying the data of the user area of the NFC chip to information about an application program supporting the NFC information of a handheld device, and using the information as the default value.
step S660, releasing the masking of the INT pin of the CPU in the ONU device, and exiting the interrupt processing function.

### Embodiment V

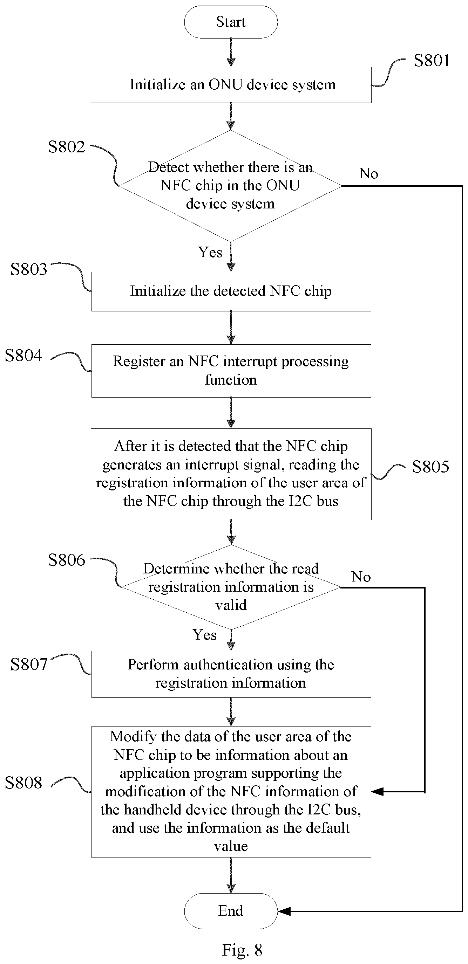

As shown in Figure 8, which is the second schematic diagram of a practical application of the method for opening an optical fiber communication service provided by an embodiment of the disclosure, the method includes:
step S801, initializing an ONU device system. Specifically, this step is the same as the related art.
step S802, detecting whether there is an NFC chip in the ONU device system, if there is a NFC chip, executing step S803; otherwise, directly exiting the initialization of the ONU device system.
step S803, initializing the detected NFC chip. Specifically, the NFC chip is connected to the processor via the I2C bus, and GPO of the NFC chip is connected to the input pin of the processor. The work mode of the NFC chip is set to the label mode and the attribute of GPO of the NFC chip is set to 0x30, ensuring that, when data of the user area of the NFC chip changes, the NFC chip generates an interrupt signal, and sends it to the processor through the GPO.
step S804, registering an NFC interrupt processing function.
step S805, after it is detected that the NFC chip generates an interrupt signal, reading the registration information of the user area of the NFC chip through the I2C bus.
step S806, determining whether the read registration information is valid, if the registration information is valid, executing step S807, otherwise executing step S808.
step S807, performing authentication using the registration information. Specifically, it is only necessary to save the registration information into a system database, so that after the system initialization is complete, if the device needs to be authenticated, the the registration information is first read from the system database.
step S808, modifying the data of the user area of the NFC chip to be information about an application program supporting the modification of the NFC information of the handheld device through the I2C bus, and using the information as the default value.

### Embodiment VI

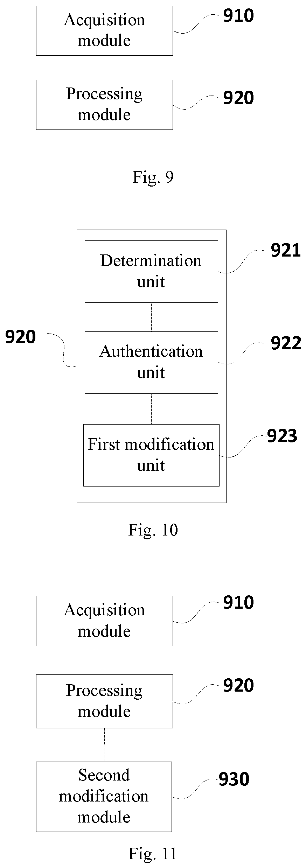

As shown in Figure 9, which is the first schematic diagram of an apparatus for opening an optical fiber communication service provided by an embodiment of the disclosure, the apparatus includes:
an acquisition module 910 configured to acquire, when it is detected that a processor has received an interrupt signal output from a near field communication (NFC) chip, registration information recorded in the NFC chip, wherein the interrupt signal is generated and output by the NFC chip when data of a user area of the NFC chip is changed; and
a processing module 920 configured to perform registration processing for opening the optical fiber communication service according to the acquired registration information.

Here, the data of the user area of the NFC chip in the network element device is modified through a hand-held device, the registration information is sent to the NFC chip in the network element device by means of near field communication, the processor in the network element device reads the registration information and performs registration processing for opening the optical fiber communication service according to the registration information. The embodiment of the disclosure improves the efficiency of the opening of the optical fiber communication service and reduces the burden of the installation and maintenance personnel. The disclosure can open the optical fiber communication service simply and efficiently, and has a great market prospect.

### Embodiment VII

As shown in Figure 10, on the basis of Embodiment VI, the processing module 920 includes: a determination unit 921 configured to determine whether the registration information is valid;
an authentication unit 922 configured to send, if the registration information is valid, the registration information to a registration module to enable the registration module to authenticate the registration information;
a first modification unit 923 configured to modify the data of the user area of the NFC chip to be information about an application program supporting the modification of NFC information of a handheld device.

### Embodiment VIII

As shown in Figure 11, on the basis of Embodiment VII, the apparatus for opening the optical fiber communication service further includes a second modification module 930 configured to modify, if the registration information is invalid, the data of the user area of the NFC chip to be information about the application program.

### Embodiment IX

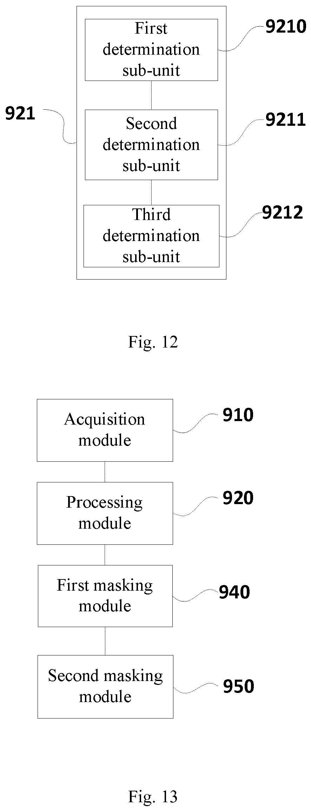

As shown in Figure 12, on the basis of Embodiment VII, the determination unit 921 includes: a first determination sub-unit 9210 configured to determine whether the format of the registration information conforms to the Passive Optical Network (PON) standard;
a second determination sub-unit 9211 configured to determine that, if the format of the registration information conforms to the PON standard, the registration information is valid;
a third determination sub-unit 9212 configured to determine that, if the format of the registration information does not conform to the PON standard, the registration information is invalid.

### Embodiment X

As shown in Figure 13, on the basis of Embodiment VI, the apparatus for opening the optical fiber communication service further includes: a first masking module 940 configured to mask, when it is detected that the input terminal of the processor has received an interrupt signal output by the NFC chip, a pin of the processor through which to receive the interrupt signal from the NFC chip;
a second masking module 950 configured to release, after the processor performs registration processing for opening the optical fiber communication service according to the acquired registration information, the masking of the pin of the processor through which to receive the interrupt signal from the NFC chip.

### Embodiment XI

On the basis of Embodiment VI, the acquisition module 910 includes:
an acquisition unit 911 configured to read the registration information recorded in the NFC chip through the I2C bus.

It is to be noted that the apparatus corresponds to the above-described method for opening the optical fiber communication service, and all the implementations of the above-described embodiments of the method are applicable to the embodiments of the apparatus, with the same technical effect achieved.

The foregoing is about the preferred embodiments of the disclosure and it should be noted that those of ordinary skill in the art may also make several improvements and modifications without departing from the principles of the disclosure, which improvements and modifications also fall within the scope of the disclosure.

### Industrial Applicability

The technical solutions provided in the embodiments of the disclosure modify the registration information recorded in the near field communication chip in the optical network unit device by installing the application program supporting the modification of the near field communication information by means of the handheld device, thereby realizing the fast opening of the optical fiber communication service, improving the efficiency of the opening of the optical fiber communication service, reducing the burden of the installation and maintenance personnel.

## Claims

1. A method for opening an optical fiber communication service, comprising:
when it is detected that a processor has received an interrupt signal output from a near field communication (NFC) chip, the processor acquiring registration information recorded in the NFC chip, wherein the interrupt signal is generated and output by the NFC chip when data of a user area of the NFC chip is changed; and
the processor performing registration processing for opening the optical fiber communication service according to the acquired registration information.

2. The method according to Claim 1, wherein, the processor performing registration processing for opening the optical fiber communication service according to the acquired registration information specifically comprising:
determining whether the registration information is valid;
if the registration information is valid, the processor sending the registration information to a registration module to enable the registration module to authenticate the registration information;
the processor modifying the data of the user area of the NFC chip to be information about an application program supporting the modification of NFC information of a handheld device.

3. The method according to Claim 2, wherein, if the registration information is invalid, the processor modifies the data of the user area of the NFC chip to be information about the application program.

4. The method according to Claim 2, wherein, determining whether the registration information is valid specifically comprising:
determining whether the format of the registration information conforms to the Passive Optical Network (PON) standard;
if the format of the registration information conforms to the PON standard, the registration information being valid;
if the format of the registration information does not conform to the PON standard, the registration information being invalid.

5. The method according to Claim 1, wherein, when it is detected that the input terminal of the processor has received an interrupt signal output by the NFC chip, the method further comprising:
masking a pin of the processor through which to receive the interrupt signal from the NFC chip;
accordingly, after the processor performs registration processing for opening the optical fiber communication service according to the acquired registration information, the method further comprises: releasing the masking of the pin of the processor through which to receive the interrupt signal from the NFC chip.

6. The method according to Claim 1, wherein, the processor acquiring registration information recorded in the NFC chip is specifically as follows:
the processor reading the registration information recorded in the NFC chip through an I2C bus.

7. An apparatus for opening an optical fiber communication service, comprising:
an acquisition module configured to acquire, when it is detected that a processor has received an interrupt signal output from a NFC chip, registration information recorded in the NFC chip, wherein the interrupt signal is generated and output by the NFC chip when data of a user area of the NFC chip is changed; and
a processing module configured to perform registration processing for opening the optical fiber communication service according to the acquired registration information.

8. The apparatus according to Claim 7, wherein, the processing module comprising:
a determination unit configured to determine whether the registration information is valid;
an authentication unit configured to send, if the registration information is valid, the registration information to a registration module to enable the registration module to authenticate the registration information;
a first modification unit configured to modify the data of the user area of the NFC chip to be information about an application program supporting the modification of NFC information of a handheld device.

9. The apparatus according to Claim 8, wherein, the apparatus further includes:
a second modification module configured to modify, if the registration information is invalid, the data of the user area of the NFC chip to be information about the application program.

10. The apparatus according to Claim 8, wherein, the determination unit comprising:
a first determination sub-unit configured to determine whether the format of the registration information conforms to the Passive Optical Network (PON) standard;
a second determination sub-unit configured to determine that, if the format of the registration information conforms to the PON standard, the registration information is valid;
a third determination sub-unit configured to determine that, if the format of the registration information does not conform to the PON standard, the registration information is invalid.

11. The apparatus according to Claim 7, wherein, the apparatus further comprises:
a first masking module configured to mask, when it is detected that the input terminal of the processor has received an interrupt signal output by the NFC chip, a pin of the processor through which to receive the interrupt signal from the NFC chip;
a second masking module configured to release, after the processor performs registration processing for opening the optical fiber communication service according to the acquired registration information, the masking of the pin of the processor through which to receive the interrupt signal from the NFC chip.

12. The apparatus according to Claim 7, wherein, the acquisition module comprising:
an acquisition unit configured to read the registration information recorded in the NFC chip through an I2C bus.
